# EUROPÄISCHE PATENTANMELDUNG

(11) **EP 3 312 688 A1**
(43) Veröffentlichungstag der Anmeldung: **25.04.2018**
(21) Anmeldenummer: 16194333.7
(22) Anmeldetag: 18.10.2016
(51) Int. Cl.: G05B 19/042

(54) **AUTOMATISCHE OPTIMIERUNG DER PARAMETRIERUNG EINER BEWEGUNGSSTEUERUNG**

(71) Anmelder: Siemens Aktiengesellschaft, 80333 München (DE)
(72) Erfinder: Bitterolf, David, 91056 Erlangen (DE); Hamm, Carsten, 91330 Eggolsheim (DE); Reichel, Theo, 91301 Forchheim (DE)

(57) **Zusammenfassung**

Eine Bewegungssteuerung (1) verwendet im Rahmen der Abarbeitung eines eine Nutzbearbeitung definierenden Teileprogramms (2) Parameter eines eine Vielzahl von Parametern umfassenden Parametersatzes (6) dazu, um anhand von Befehlen (3) des Teileprogramms (2) und Istwerten (x, v) einer Anzahl (n) von Achsen (A) einer von der Bewegungssteuerung (1) gesteuerten Maschine Steuerbefehle für den Achsen (A) zugeordnete Antriebe (D) der Maschine zu ermitteln und die Antriebe (D) mit den ermittelten Steuerbefehlen zu beaufschlagen. Eine Überprüfungseinrichtung (7) überprüft die Parameter jeweils auf die Einhaltung von durch jeweilige physikalische Gegebenheiten definierte Bedingungen. In vielen Fällen kann die Überprüfungseinrichtung (7) die jeweiligen physikalischen Gegebenheiten jeweils anhand anderer Parameter des Parametersatzes (6) ermitteln.

## Beschreibung

Die vorliegende Erfindung geht aus von einem Überprüfungsverfahren für einen eine Vielzahl von Parametern umfassenden Parametersatz einer Bewegungssteuerung,
- wobei die Parameter von der Bewegungssteuerung im Rahmen der Abarbeitung eines eine Nutzbearbeitung definierenden Teileprogramms dazu verwendet werden, um anhand von Befehlen des Teileprogramms und Istwerten einer Anzahl von Achsen einer von der Bewegungssteuerung gesteuerten Maschine Steuerbefehle für den Achsen zugeordnete Antriebe der Maschine zu ermitteln und die Antriebe mit den ermittelten Steuerbefehlen zu beaufschlagen.

Die Qualität des Verhaltens der Achsen einer Werkzeug- oder Produktionsmaschine oder eines Roboters wird insbesondere nach den Kriterien bewertet, mit welcher Genauigkeit und mit welchem zeitlichen Verhalten Positionen angefahren werden können, mit welcher Schnelligkeit und Genauigkeit Störungen ausgeregelt werden können und welches Ausmaß der Fehler beim Abfahren einer mehrachsigen Kontur annimmt. All diese Kriterien werden in erheblichem Ausmaß durch die Parametrierung einer Vielzahl von Antriebs- und Steuerparametern der Bewegungssteuerung beeinflusst. Eine optimale Einstellung aller Parameter erfordert eine detaillierte Analyse und eine profunde Kenntnis des Zusammenwirkens des elektrischen Systems (Antriebe und deren Ansteuerung) einerseits und des mechanischen Systems (Umsetzung in die mechanische Bewegung) andererseits. Die optimale Einstellung der Parameter ist daher nur durch Experten erreichbar.

Obwohl die optimale Einstellung nur durch Experten erreichbar ist, ist es dennoch möglich, einen Teil der Parametrierung durch einfache Regeln zumindest auf Plausibilität und Einhaltung von Grenzen zu überprüfen. Das Ziel einer derartigen Prüfung ist insbesondere, eine grob fehlerhafte Parametrierung der Bewegungssteuerung zu vermeiden, welche die Sicherheit der Maschine gefährden könnte. Ein weiteres Ziel ist die Überprüfung der Parameter auf Konsistenz und technisch bzw. technologisch sinnvolle Werte.

Die Antriebs- und Steuerungsparameter liegen in der Regel nur als Listen vor. Eine intellektuelle oder automatisierte Überprüfung erfolgt nicht, sondern wird nur intellektuell im Einzelfall beim Auftreten von Problemen durchgeführt. Die Überprüfung erfordert Expertenwissen über die Bedeutung der Antriebs- und Steuerungsparameter, das Zusammenwirken der verschiedenen Parameter und sinnvolle Werte und Wertebereiche für die einzelnen Parameter.

Die Aufgabe der vorliegenden Erfindung besteht darin, Möglichkeiten zu schaffen, mittels derer auf einfache und zuverlässige Weise automatisiert eine umfassende Überprüfung eines Parametersatzes einer Bewegungssteuerung möglich wird.

Die Aufgabe wird durch ein Überprüfungsverfahren mit den Merkmalen des Anspruchs 1 gelöst. Vorteilhafte Ausgestaltungen des Überprüfungsverfahrens sind Gegenstand der abhängigen Ansprüche 2 bis 12.

Erfindungsgemäß wird ein Überprüfungsverfahren für einen derartigen Parametersatz einer Bewegungssteuerung geschaffen, bei dem eine Überprüfungseinrichtung die Parameter jeweils auf die Einhaltung von durch jeweilige physikalische Gegebenheiten definierte Bedingungen überprüft.

In vielen Fällen sind die physikalischen Gegebenheiten nicht absoluter Natur. In derartigen Fällen ist es beispielsweise möglich, dass die Überprüfungseinrichtung die jeweiligen physikalischen Gegebenheiten jeweils anhand anderer Parameter des Parametersatzes ermittelt.

Der zu überprüfende Parameter kann beispielsweise eine elektrische oder elektromechanische Kenngröße eines der Antriebe sein. In diesem Fall kann die physikalische Gegebenheit eine mechanische Kenngröße der von dem jeweiligen Antrieb angetriebenen Achse sein.

Alternativ kann der zu überprüfende Parameter beispielsweise eine Glättungszeit eines Istwertfilters sein. In diesem Fall kann die physikalische Gegebenheit eine Geberauflösung eines Gebers sein, dessen Istwert dem Istwertfilter zugeführt wird.

Alternativ kann der zu überprüfende Parameter beispielsweise ein Reglerparameter eines auf einen der Antriebe wirkenden Reglers sein. In diesem Fall kann die physikalische Gegebenheit eine Kombination mindestens einer Taktzeit, mit der der Regler betrieben wird, und einer Masse der von dem jeweiligen Antrieb angetriebenen Achse (oder einer hierzu gleichwertigen Größe wie beispielsweise einem Trägheitsmoment) sein.

Alternativ kann der zu überprüfende Parameter beispielsweise der Maximalwert einer Verstärkung eines Frequenzgangs eines durch die Steuerung der Maschine durch die Bewegungssteuerung geschlossenen Regelkreises sein. In diesem Fall kann die physikalische Gegebenheit ein Grenzverstärkungsfaktor sein.

Alternativ kann der zu überprüfende Parameter beispielsweise der Aktivierungszustand eines Istwertfilters sein. In diesem Fall kann die physikalische Gegebenheit eine Geberauflösung eines Gebers sein, dessen Istwert dem Istwertfilter zugeführt wird.

In manchen Fällen kann der zu überprüfende Parameter eine DSC (= dynamic stiffnes control oder dynamic servo control) oder eine Invertierung eines zugehörigen Lageistwerts sein. In diesem Fall kann die physikalische Gegebenheit jeweils umgekehrt die entsprechende Invertierung eines Lageistwerts oder die zugehörige DSC sein.

Alternativ kann der zu überprüfende Parameter beispielsweise ein statisches und/oder dynamisches Verhalten einer Achse der Maschine sein. In diesem Fall kann die physikalische Gegebenheit das statische und/oder dynamische Verhalten einer anderen Achse der Maschine sein.

Alternativ kann der zu überprüfende Parameter beispielsweise mindestens eine Taktzeit sein, mit der die Bewegungssteuerung die Steuerbefehle ermittelt. In diesem Fall kann die physikalische Gegebenheit die Kombination einer Prozessorkapazität und der Anzahl an Achsen sein.

Alternativ kann der zu überprüfende Parameter beispielsweise ein von der Bewegungssteuerung als Einheit anwählbarer Parametervektor für einen ersten Betriebsmodus der Bewegungssteuerung sein. In diesem Fall kann die physikalische Gegebenheit ein als Einheit anwählbarer Parametervektor für einen zweiten Betriebsmodus der Bewegungssteuerung sein.

Alternativ kann der zu überprüfende Parameter beispielsweise ein an einem ersten Ort entlang eines Verfahrweges einer Achse auftretender erster Kompensationswert sein. In diesem Fall kann die physikalische Gegebenheit ein an einem zweiten Ort entlang des Verfahrweges der Achse auftretender zweiter Kompensationswert sein.

Die Aufgabe wird weiterhin durch ein Computerprogramm gelöst, das Maschinencode umfasst, der von einer Überprüfungseinrichtung abarbeitbar ist, wobei die Abarbeitung des Maschinencodes durch die Überprüfungseinrichtung bewirkt, dass die Überprüfungseinrichtung ein derartiges Überprüfungsverfahren ausführt.

Die Aufgabe wird weiterhin durch eine Überprüfungseinrichtung gelöst, wobei die Überprüfungseinrichtung mit einem derartigen Computerprogramm programmiert ist, so dass die Überprüfungseinrichtung im Betrieb ein derartiges Überprüfungsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Teileprogramm, eine Bewegungssteuerung und eine Überprüfungseinrichtung,
- FIG 2 bis 4: jeweils Parameter und Überprüfungen,
- FIG 5: einen Frequenzgang,
- FIG 6 bis 9: jeweils Parameter und Überprüfungen,
- FIG 10: Parametergruppen und Überprüfungen und
- FIG 11: Kompensationswerte und Überprüfungen.

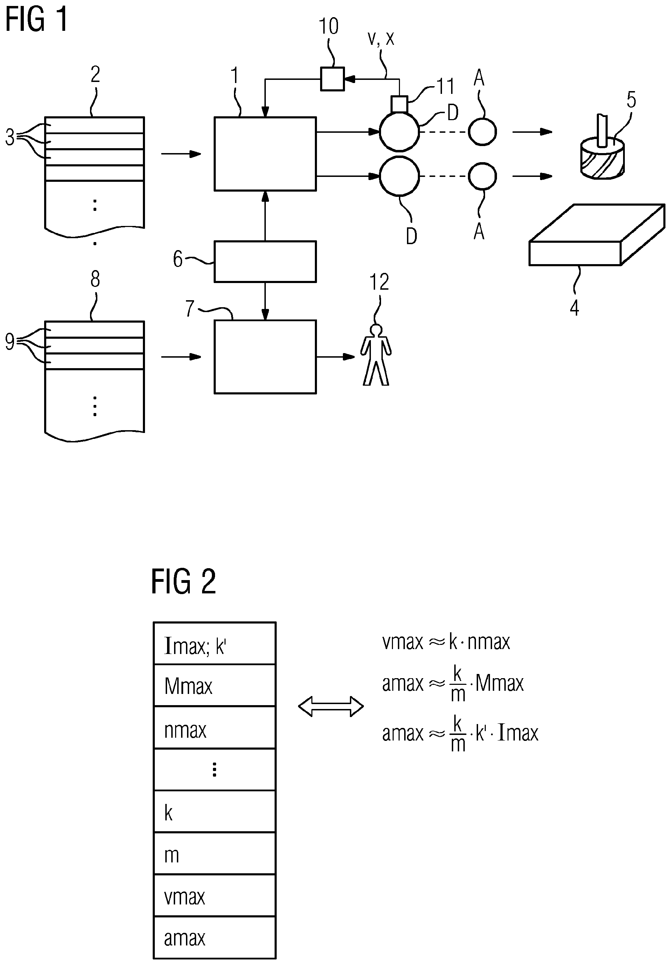

Eine Bewegungssteuerung 1 arbeitet gemäß FIG 1 ein Teileprogramm 2 ab. Insbesondere umfasst das Teileprogramm 2 eine Vielzahl von Befehlen 3. Die Abarbeitung des Teileprogramms 2 bewirkt eine Nutzbearbeitung eines Werkstücks 4 durch ein Werkzeug 5. Die Nutzbearbeitung ist somit durch das Teileprogramm 2 definiert. Im Rahmen der Abarbeitung des Teileprogramms 2 greift die Bewegungssteuerung 1 auf einen Parametersatz 6 zu. Der Parametersatz 6 ist in der Bewegungssteuerung 1 hinterlegt. Er umfasst eine Vielzahl von Parametern. Einige der Parameter werden später noch näher erläutert werden. Die Parameter werden von der Bewegungssteuerung 1 dazu verwendet, um anhand der Befehle 3 des Teileprogramms 2 und Istwerten x (für die Position) und v (für die Geschwindigkeit) einer Anzahl n von Achsen A einer von der Bewegungssteuerung 1 gesteuerten Maschine Steuerbefehle für den Achsen A zugeordnete Antriebe D zu ermitteln und die Antriebe D mit den ermittelten Steuerbefehlen zu beaufschlagen. Die Anzahl n an Achsen A liegt in der Regel bei drei oder mehr, beispielsweise bei vier, fünf oder sechs Achsen A.

Zur Überprüfung des Teileprogramms 1 ist eine Überprüfungseinrichtung 7 vorhanden. Die Überprüfungseinrichtung 7 kann Bestandteil der Bewegungssteuerung 1 sein oder eine von der Bewegungssteuerung 1 verschiedene Einrichtung sein. Die Überprüfungseinrichtung 7 ist mit einem Computerprogramm 8 programmiert. Das Computerprogramm 5 umfasst Maschinencode 9, der von der Überprüfungseinrichtung 7 abarbeitbar ist. Die Abarbeitung des Maschinencodes 9 durch die Überprüfungseinrichtung 7 bewirkt, dass die Überprüfungseinrichtung 7 im Betrieb ein Überprüfungsverfahren ausführt. Im Rahmen der Ausführung des Überprüfungsverfahrens überprüft die Überprüfungseinrichtung 7 die Parameter des Parametersatzes 6 jeweils auf Einhaltung von durch jeweilige physikalische Gegebenheiten definierte Bedingungen. Dies wird aus den nachstehenden Erläuterungen zu den weiteren FIG ersichtlich werden. Es ist möglich, dass die jeweiligen physikalischen Gegebenheiten absolut definiert sind oder der Überprüfungseinrichtung 7 explizit vorgegeben werden. In vielen Fällen ist es jedoch möglich, dass die Überprüfungseinrichtung 7 die jeweiligen physikalischen Gegebenheiten jeweils anhand anderer Parameter des Parametersatzes 6 ermittelt. Auch dies wird aus den nachstehenden Erläuterungen zu den weiteren FIG ersichtlich werden.

So ist es beispielsweise entsprechend der Darstellung in FIG 2 möglich, dass der zu überprüfende Parameter eine elektrische oder elektromechanische Kenngröße eines der Antriebe D ist. In diesem Fall ist die physikalische Gegebenheit eine mechanische Kenngröße der von dem jeweiligen Antrieb D angetriebenen Achse A. Beispielsweise kann die elektromechanische Kenngröße "maximale Drehzahl" nmax vorgegeben sein. In diesem Fall kann die Überprüfungseinrichtung 7 anhand der - im Regelfall ebenfalls als Parameter vorgegebenen - mechanischen Kenngröße "maximale Geschwindigkeit" vmax in Verbindung mit einer Übersetzung k überprüfen, ob die Kenngröße "maximale Drehzahl" nmax unter Berücksichtigung der Übersetzung k exakt oder wenigstens im wesentlichen (beispielsweise auf ± 10 % genau oder ± 20 % genau) mit der mechanischen Kenngröße "maximale Geschwindigkeit" vmax korrespondiert. Alternativ oder zusätzlich kann die elektromechanische Kenngröße "maximales Drehmoment" Mmax vorgegeben sein. In diesem Fall kann die Überprüfungseinrichtung 7 anhand der - im Regelfall ebenfalls als Parameter vorgegebenen - mechanischen Kenngrößen "maximale Beschleunigung" amax und "Masse" m in Verbindung mit der Übersetzung k überprüfen, ob die Kenngröße "maximales Drehmoment" Mmax unter Berücksichtigung der Übersetzung k exakt oder wenigstens im wesentlichen (beispielsweise auf ± 10 % genau) mit der mechanischen Kenngröße "maximale Beschleunigung" amax korrespondiert. Anstelle der elektromechanischen Kenngröße "maximales Drehmoment" Mmax kann alternativ auch die elektrische Kenngröße "maximaler Strom" Imax in Verbindung mit einer Umrechnungskonstanten k' herangezogen werden.

FIG 2 zeigt somit zugleich auch Beispiele, bei denen die Überprüfungseinrichtung 7 die physikalischen Gegebenheiten anhand anderer Parameter des Parametersatzes 6 ermittelt. Weiterhin ist die Vorgehensweise von FIG 2 individuell für jeden Antrieb D und die zugehörige Achse A realisierbar.

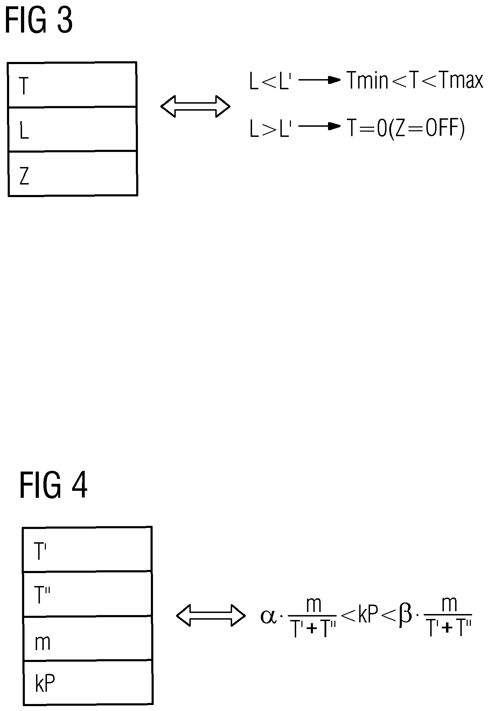

Alternativ oder zusätzlich ist es entsprechend FIG 3 möglich, dass der zu überprüfende Parameter eine Glättungszeit T eines Istwertfilters 10 (siehe FIG 1) ist. In diesem Fall kann die physikalische Gegebenheit eine Geberauflösung L eines Gebers 11 sein, dessen Istwert dem Istwertfilter 10 zugeführt wird. Insbesondere kann die Überprüfungseinrichtung 7 überprüfen, ob die Glättungszeit T zwischen einem Minimalwert Tmin und einem Maximalwert Tmax liegt, wobei der Minimalwert Tmin und der Maximalwert Tmax von der Überprüfungseinrichtung 7 in Abhängigkeit von der Geberauflösung L ermittelt werden können.

Es ist weiterhin möglich, dass die Überprüfungseinrichtung 7 die Überprüfung nur dann durchführt, wenn die Geberauflösung L einen relativ kleinen Wert (unterhalb einer Grenzauflösung L') aufweist. Wenn diese Prüfung erfolgt, kann in dem Fall, dass die Geberauflösung L oberhalb der Grenzauflösung L' liegt, alternativ geprüft werden, ob der Istwertfilter 10 überhaupt aktiviert ist. Denn bei einer hinreichend hohen Geberauflösung L ist eine Filterung oftmals nicht nur nicht erforderlich, sondern sogar nachteilig. In diesem Fall ist der zu überprüfende Parameter der Aktivierungszustand Z des Istwertfilters 10 (ON bzw. OFF). Die physikalische Gegebenheit ist in diesem Fall die Geberauflösung L des Gebers 11. Der Istwertfilter 10 und der Geber 11 sind in FIG 1 nur für den Antrieb D einer einzigen Achse A dargestellt. Sie sind jedoch in der Regel für jeden Antrieb D vorhanden.

Sowohl die Glättungszeit T als auch die Geberauflösung L als auch der Aktivierungszustand Z können als Parameter definiert sein. Auch die Ausgestaltung gemäß FIG 3 zeigt somit Beispiele, bei denen die Überprüfungseinrichtung 7 die physikalischen Gegebenheiten anhand anderer Parameter des Parametersatzes 6 ermittelt. Weiterhin ist die Vorgehensweise von FIG 3 individuell für jeden Geber 10 realisierbar.

Weiterhin ist es entsprechend der Darstellung in FIG 4 möglich, dass der zu überprüfende Parameter ein Reglerparameter kP eines auf einen der Antriebe D wirkenden Reglers ist. In diesem Fall kann die physikalische Gegebenheit eine Kombination mindestens einer Taktzeit T', T", mit der der Regler betrieben wird, und der Masse m der von dem jeweiligen Antrieb D angetriebenen Achse A sein. Wenn beispielsweise T' der Interpolationstakt der Drehzahlregelung und T" der Interpolationstakt der Stromregelung eines der Antriebe D ist, sollte für den Verstärkungsfaktor kP der Proportionalregelung die Beziehung gelten, dass sie zwischen dem α-fachen und dem β-fachen der Masse m, dividiert durch die Summe der Taktzeiten T', T", liegt. α und β sind geeignet gewählte Konstanten. Beispielsweise kann für die Konstante α gelten, dass sie im Bereich zwischen 0,10 und 0,15 liegt, insbesondere bei etwa 0,125. Die Konstante β sollte in etwa den doppelten Wert der Konstanten α aufweisen. Sie sollte also im Bereich zwischen 0,20 und 0,30 liegen.

Auch die Ausgestaltung gemäß FIG 4 zeigt somit ein Beispiel, bei dem die Überprüfungseinrichtung 7 die physikalischen Gegebenheiten anhand anderer Parameter des Parametersatzes 6 ermittelt. Weiterhin ist die Vorgehensweise von FIG 3 individuell für jeden Antrieb D realisierbar.

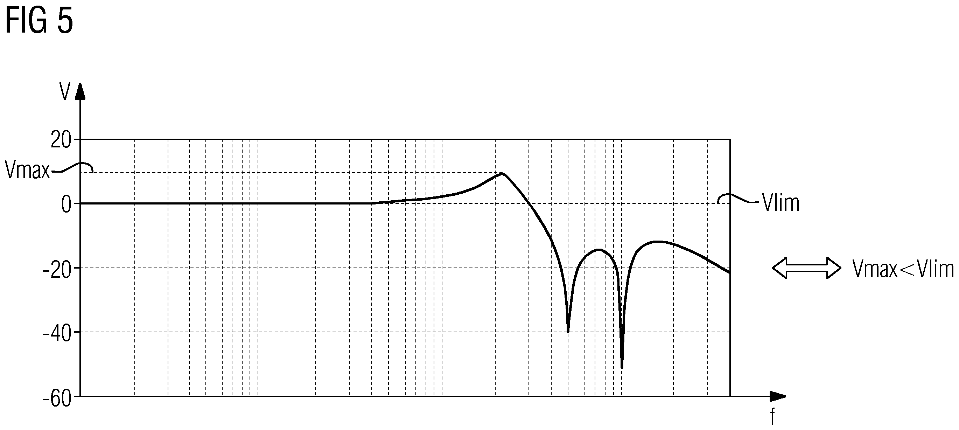

Weiterhin ist es entsprechend der Darstellung in FIG 5 möglich, dass der Parametersatz 6 eine Beschreibung eines Frequenzgangs umfasst. Der Frequenzgang umfasst eine Verstärkung V einer Regeldifferenz als Funktion der Frequenz f und den zugehörigen Phasengang. Die Verstärkung V ist in FIG 5 nach oben logarithmisch (nämlich in Dezibel) eingezeichnet. Die Frequenz f ist in FIG 5 ebenfalls logarithmisch eingezeichnet. Bei einem Frequenzgang als Parameter kann die Überprüfungseinrichtung 7 überprüfen, ob ein Maximalwert Vmax der Verstärkung V maximal so groß wie ein Grenzverstärkungsfaktor Vlim ist. Der Grenzverstärkungsfaktor Vlim seinerseits darf maximal einen Wert von 1 aufweisen. Im Falle der Ausgestaltung gemäß FIG 5 ist somit der zu überprüfende Parameter der Maximalwert Vmax, die physikalische Gegebenheit der Grenzverstärkungsfaktor Vlim. Der Grenzverstärkungsfaktor Vlim kann als Parameter vorgegeben sein. Alternativ kann der Grenzverstärkungsfaktor Vlim von der Überprüfungseinrichtung 7 auf den Wert 1 festgesetzt werden.

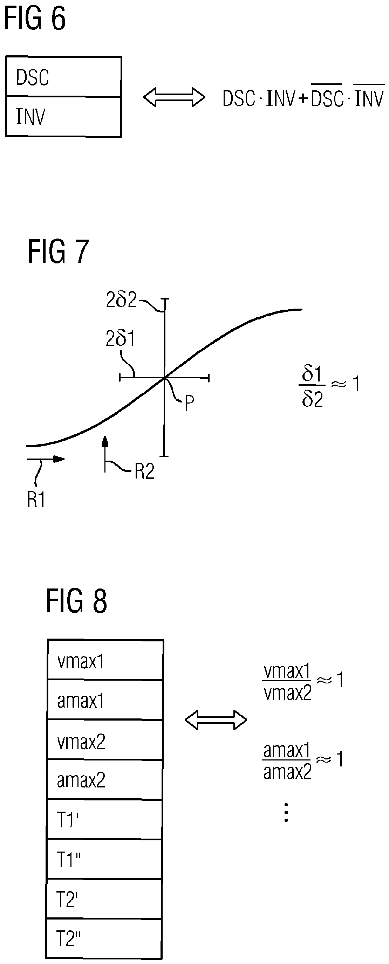

Weiterhin ist es entsprechend der Darstellung in FIG 6 möglich, dass der Parametersatz 6 einen Parameter DSC umfasst. In diesem Fall kann der Parametersatz 6 als Parameter weiterhin auch eine Istwertinvertierung INV umfassen. Die Istwertinvertierung INV bewirkt eine Invertierung des zugehörigen Lageistwertes. In manchen Fällen müssen die Parameter DSC und INV entweder beide gesetzt sein oder beide nicht gesetzt sein. Es kann daher in derartigen Fällen nach Belieben einer der beiden Parameter als der zu überprüfende Parameter und der jeweils andere Parameter als physikalische Gegebenheit angesehen werden. Dies ist in FIG 6 in Boolescher Notation eingezeichnet.

Nachfolgend werden in Verbindung mit den FIG 7 und 8 den jeweiligen Bezugszeichen die Ziffer 1 und 2 usw. hinzugefügt, um einzelne Achsen A1, A2 und deren zugehörige Parameter voneinander unterscheiden zu können.

Es ist es möglich, dass der zu überprüfende Parameter ein statisches Verhalten einer Achse A1 der Maschine ist und die physikalische Gegebenheit das statische Verhalten einer anderen Achse A2 der Maschine ist. Beispielsweise können als Parameter des Parametersatzes 6 Positioniergenauigkeiten δ1, δ2 definiert sein. Die Positioniergenauigkeit δ1 gibt entsprechend der Darstellung in FIG 7 an, mit welcher Genauigkeit eine prinzipiell beliebige Position P in einer ersten Richtung R1 mittels der ersten Achse A1 angefahren werden kann. In analoger Weise gibt die Positioniergenauigkeit δ2 an, mit welcher Genauigkeit die Position P in einer zweiten Richtung R2 mittels der zweiten Achse A1 angefahren werden kann. Die von der Überprüfungseinrichtung 7 durchgeführte Überprüfung kann entsprechend der Darstellung in FIG 7 darin bestehen, zu überprüfen, ob der Quotient der Positioniergenauigkeiten δ1, δ2 in etwa - beispielsweise mit einer Genauigkeit von ± 10 % oder ± 20 % - den Wert 1 aufweist.

Alternativ oder zusätzlich ist es möglich, dass der zu überprüfende Parameter ein dynamisches Verhalten der Achse A1 und die physikalische Gegebenheit das dynamische Verhalten der anderen Achse A2 ist. Beispielsweise können entsprechend der Darstellung in FIG 8 die maximalen Geschwindigkeiten vmax1, vmax2 und/oder die maximalen Beschleunigungen amax1, amax2 dahingehend überprüft werden, ob der Quotient der maximalen Geschwindigkeiten vmax1, vmax2 bzw. der maximalen Beschleunigungen amax1, amax2 in etwa - beispielsweise mit einer Genauigkeit von ± 10 % oder ± 20 % - den Wert 1 aufweist. Weiterhin kann überprüft werden, ob Sprungantworten der Achsen A1, A2 miteinander harmonieren, insbesondere im wesentlichen gleiche Zeitkonstanten aufweisen. Die Zeitkonstanten können als solche gegeben sein. Alternativ können sie anhand der Taktzeiten T1' und T2' bzw. T1" und T2" in Verbindung mit den zugehörigen Verstärkungsfaktoren kP1, kP2 ermittelt werden.

Auch die Ausgestaltungen gemäß den FIG 7 und 8 zeigen somit Beispiele, bei denen die Überprüfungseinrichtung 7 die physikalischen Gegebenheiten anhand anderer Parameter des Parametersatzes 6 ermittelt. Weiterhin ist die Vorgehensweise der FIG 7 und 8 individuell für jedes Paar von Achsen A realisierbar.

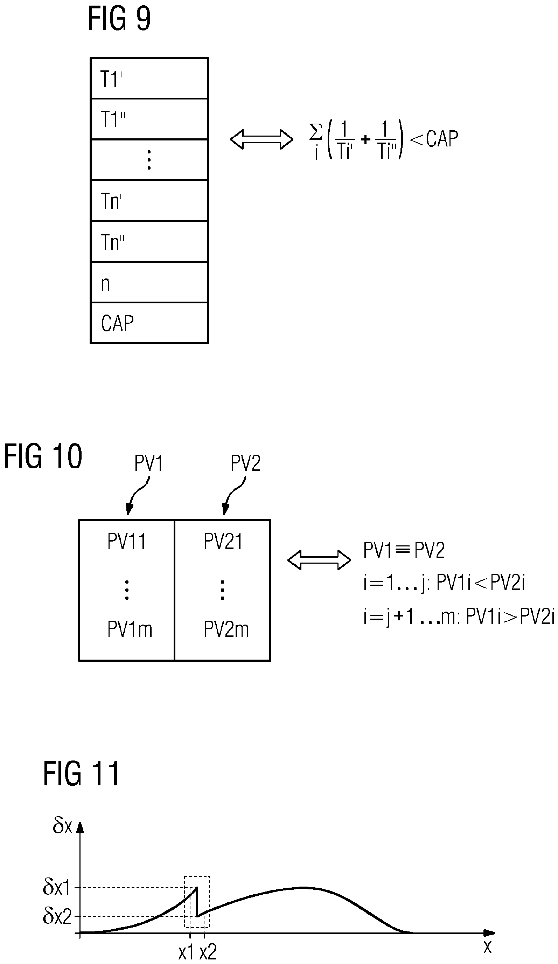

Alternativ oder zusätzlich ist es entsprechend der Darstellung in FIG 9 möglich, dass der zu überprüfende Parameter mindestens eine Taktzeit T1',..., Tn', T1", ..., Tn" ist, mit der die Bewegungssteuerung 1 die Steuerbefehle für die Achsen A ermittelt. In diesem Fall kann die physikalische Gegebenheit die Kombination einer Prozessorkapazität CAP (das heißt eine Angabe über die Leistungsfähigkeit des Prozessors der Bewegungssteuerung 1) und der Anzahl n an Achsen A sein. Insbesondere kann die Überprüfungseinrichtung 7 dadurch prüfen, ob der Prozessor der Bewegungssteuerung 1 überfordert wird.

Es ist sogar möglich, ganze Parametergruppen des Parametersatzes 6 miteinander zu vergleichen. Beispielsweise können für verschiedene Bearbeitungsmodi (beispielsweise Schruppen und Schlichten) jeweilige Parametervektoren PV1, PV2 definiert sein. Die Parametervektoren PV1, PV2 können im Rahmen der Abarbeitung des Teileprogramms 2 von der Bewegungssteuerung 1 jeweils als Einheit angewählt werden. Die Parametervektoren PV1, PV2 können beispielsweise sogenannte G-Gruppen sein. Jeder Parametervektor PV1, PV2 umfasst gemäß der Darstellung in FIG 10 jeweils eine Mehrzahl von einzelnen Parametern PV11, ..., PV1m bzw. PV21, ..., PV2m. In diesem Fall kann die Überprüfungseinrichtung 7 entsprechend der Darstellung in FIG 10 zum einen überprüfen, ob die beiden Parametervektoren PV1, PV2 überhaupt voneinander verschieden sind oder ob sie identisch sind. Zum anderen kann die Überprüfungseinrichtung 7 entsprechend der Darstellung in FIG 10 überprüfen, ob bestimmte Parameter PV11, ..., PV1m des einen Parametervektors PV1 größer bzw. kleiner als die Parameter PV21, ..., PV2m des anderen Parametervektors PV2 sind.

In der Bewegungssteuerung 1 ist als Bestandteil des Parametersatzes 6 entsprechend der Darstellung in FIG 11 oftmals auch für jede Achse A hinterlegt, wie groß ein systematischer Positionierfehler δx der jeweiligen Achse A als Funktion des Verfahrweges x der jeweiligen Achse A ist. Die Kenntnis über den systematischen Positionierfehler δx ermöglicht eine entsprechende Kompensation durch einen entsprechenden Kompensationswert. Es ist möglich, dass der zu überprüfende Parameter ein an einem ersten Ort x1 entlang des Verfahrweges der Achse A auftretender erster Kompensationswert δx1 ist. Die physikalische Gegebenheit kann in diesem Fall ein an einem zweiten Ort x2 entlang des Verfahrweges x auftretender zweiter Kompensationswert δx2 sein. Insbesondere ist eine Überprüfung des Verlaufs der Kompensationswerte auf Monotonität, Sprünge oder die Orte von Minima und Maxima möglich.

Die obenstehend in Verbindung mit den FIG 2 bis 11 erläuterten Vorgehensweisen können nach Bedarf einzeln oder in beliebiger Kombination realisiert sein.

Die Ergebnisse der von der Überprüfungseinrichtung 7 vorgenommenen Überprüfungen können beispielsweise als Liste an einen Anwender 12 (siehe FIG 1) ausgegeben werden. Problematische Stellen können in der Ausgabe optisch hervorgehoben werden. Bei einer Ausgabe über ein Sichtgerät ist ein dynamisches Variieren möglich, beispielsweise ein Blinken. Sowohl bei einer Ausgabe über ein Sichtgerät als auch bei einer Ausgabe über einen Drucker oder dergleichen ist beispielsweise eine Hervorhebung durch eine Umrahmung, durch Fettdruck oder durch Farbgebung (beispielsweise rot für kritische Werte, gelb für Warnhinweise und Grün oder nicht hervorgehoben für ordnungsgemäße Werte) möglich. Unter Umständen kann die Überprüfungseinrichtung 7 dem Anwender 12 sogar verbesserte Werte für die Parameter des Parametersatzes 6 vorschlagen.

Zusammengefasst betrifft die vorliegende Erfindung somit folgenden Sachverhalt:
Eine Bewegungssteuerung 1 verwendet im Rahmen der Abarbeitung eines eine Nutzbearbeitung definierenden Teileprogramms 2 Parameter eines eine Vielzahl von Parametern umfassenden Parametersatzes 6 dazu, um anhand von Befehlen 3 des Teileprogramms 2 und Istwerten x, v einer Anzahl (n) von Achsen A einer von der Bewegungssteuerung 1 gesteuerten Maschine Steuerbefehle für den Achsen A zugeordnete Antriebe D der Maschine zu ermitteln und die Antriebe D mit den ermittelten Steuerbefehlen zu beaufschlagen. Eine Überprüfungseinrichtung 7 überprüft die Parameter jeweils auf die Einhaltung von durch jeweilige physikalische Gegebenheiten definierte Bedingungen. In vielen Fällen kann die Überprüfungseinrichtung 7 die jeweiligen physikalischen Gegebenheiten jeweils anhand anderer Parameter des Parametersatzes 6 ermitteln.

Die vorliegende Erfindung weist viele Vorteile auf. Insbesondere ist auf einfache und zuverlässige Weise eine umfassende Prüfung und Optimierung des Parametersatzes 6 möglich. In vielen Fällen kann die Überprüfungseinrichtung 7 sogar die Prüfungsbedingungen anhand des Parametersatzes 6 selbst ermitteln.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überprüfungsverfahren für einen eine Vielzahl von Parametern umfassenden Parametersatz (6) einer Bewegungssteuerung (1),
- wobei die Parameter von der Bewegungssteuerung (1) im Rahmen der Abarbeitung eines eine Nutzbearbeitung definierenden Teileprogramms (2) dazu verwendet werden, um anhand von Befehlen (3) des Teileprogramms (2) und Istwerten (x, v) einer Anzahl (n) von Achsen (A) einer von der Bewegungssteuerung (1) gesteuerten Maschine Steuerbefehle für den Achsen (A) zugeordnete Antriebe (D) der Maschine zu ermitteln und die Antriebe (D) mit den ermittelten Steuerbefehlen zu beaufschlagen,
- wobei eine Überprüfungseinrichtung (7) die Parameter jeweils auf die Einhaltung von durch jeweilige physikalische Gegebenheiten definierte Bedingungen überprüft.

2. Überprüfungsverfahren nach Anspruch 1,
**dadurch gekennzeichnet,**
**dass** die Überprüfungseinrichtung (7) die jeweiligen physikalischen Gegebenheiten jeweils anhand anderer Parameter des Parametersatzes (6) ermittelt.

3. Überprüfungsverfahren nach Anspruch 1 oder 2,
**dadurch gekennzeichnet,**
**dass** der zu überprüfende Parameter eine elektrische oder elektromechanische Kenngröße (nmax, Mmax, Imax) eines der Antriebe (D) ist und dass die physikalische Gegebenheit eine mechanische Kenngröße (vmax, amax) der von dem jeweiligen Antrieb (D) angetriebenen Achse (A) ist.

4. Überprüfungsverfahren nach Anspruch 1, 2 oder 3,
**dadurch gekennzeichnet,**
**dass** der zu überprüfende Parameter eine Glättungszeit (T) eines Istwertfilters (10) ist und dass die physikalische Gegebenheit eine Geberauflösung (L) eines Gebers (11) ist, dessen Istwert dem Istwertfilter (10) zugeführt wird.

5. Überprüfungsverfahren nach einem der obigen Ansprüche,
**dadurch gekennzeichnet,**
**dass** der zu überprüfende Parameter ein Reglerparameter (kP) eines auf einen der Antriebe (D) wirkenden Reglers ist und dass die physikalische Gegebenheit eine Kombination mindestens einer Taktzeit (T', T"), mit der der Regler betrieben wird, und einer Masse (m) der von dem jeweiligen Antrieb (D) angetriebenen Achse (A) ist.

6. Überprüfungsverfahren nach einem der obigen Ansprüche,
**dadurch gekennzeichnet,**
**dass** der zu überprüfende Parameter der Maximalwert (Vmax) einer Verstärkung (V) eines Frequenzgangs eines durch die Steuerung der Maschine durch die Bewegungssteuerung (1) geschlossenen Regelkreises ist und dass die physikalische Gegebenheit ein Grenzverstärkungsfaktor (Vlim) ist.

7. Überprüfungsverfahren nach einem der obigen Ansprüche,
**dadurch gekennzeichnet,**
**dass** der zu überprüfende Parameter der Aktivierungszustand (Z) eines Istwertfilters (10) ist und dass die physikalische Gegebenheit eine Geberauflösung (L) eines Gebers (11) ist, dessen Istwert dem Istwertfilter (10) zugeführt wird.

8. Überprüfungsverfahren nach einem der obigen Ansprüche,
**dadurch gekennzeichnet,**
**dass** der zu überprüfende Parameter eine DSC oder eine Invertierung (INV) eines zugehörigen Lageistwerts (x) ist und dass die physikalische Gegebenheit die Invertierung (INV) eines zugehörigen Lageistwerts (x) oder eine DSC ist.

9. Überprüfungsverfahren nach einem der obigen Ansprüche,
**dadurch gekennzeichnet,**
**dass** der zu überprüfende Parameter ein statisches und/oder dynamisches Verhalten (δ1, vmax1, amax1) einer Achse (A1) der Maschine ist und dass die physikalische Gegebenheit das statische und/oder dynamische Verhalten (δ2, vmax2, amax2) einer anderen Achse (A2) der Maschine ist.

10. Überprüfungsverfahren nach einem der obigen Ansprüche,
**dadurch gekennzeichnet,**
**dass** der zu überprüfende Parameter mindestens eine Taktzeit (T1',..., Tn', T1", ..., Tn") ist, mit der die Bewegungssteuerung (1) die Steuerbefehle ermittelt, und dass die physikalische Gegebenheit die Kombination einer Prozessorkapazität (CAP) und der Anzahl (n) an Achsen (A) ist.

11. Überprüfungsverfahren nach einem der obigen Ansprüche,
**dadurch gekennzeichnet,**
**dass** der zu überprüfende Parameter ein von der Bewegungssteuerung (1) als Einheit anwählbarer Parametervektor (PV1) für einen ersten Betriebsmodus der Bewegungssteuerung (1) ist und die physikalische Gegebenheit ein als Einheit anwählbarer Parametervektor (PV2) für einen zweiten Betriebsmodus der Bewegungssteuerung (1) ist.

12. Überprüfungsverfahren nach einem der obigen Ansprüche,
**dadurch gekennzeichnet,**
**dass** der zu überprüfende Parameter ein an einem ersten Ort (x1) entlang eines Verfahrweges (x) einer Achse (A) auftretender erster Kompensationswert (δx1) ist und dass die physikalische Gegebenheit ein an einem zweiten Ort (x2) entlang des Verfahrweges (x) der Achse (A) auftretender zweiter Kompensationswert (δx2) ist.

13. Computerprogramm, das Maschinencode (9) umfasst, der von einer Überprüfungseinrichtung (7) abarbeitbar ist, wobei die Abarbeitung des Maschinencodes (9) durch die Überprüfungseinrichtung (7) bewirkt, dass die Überprüfungseinrichtung (7) ein Überprüfungsverfahren nach einem der obigen Ansprüche ausführt.

14. Überprüfungseinrichtung, wobei die Überprüfungseinrichtung mit einem Computerprogramm (8) nach Anspruch 13 programmiert ist, so dass die Überprüfungseinrichtung im Betrieb ein Überprüfungsverfahren nach einem der Ansprüche 1 bis 12 ausführt.
